# EUROPEAN PATENT APPLICATION

(11) **EP 4 722 006 A1**
(43) Date of publication of application: **08.04.2026**
(21) Application number: 25204474.8
(22) Date of filing: 24.09.2025
(51) Int. Cl.: B60C 23/00, B60C 23/04

(54) **DETERMINATION OF LOCATION OF TIRE-MOUNTED SENSORS AMONG A PLURALITY OF VEHICLE TIRE POSITIONS**

(30) Priority: 06.10.2024 US 202418907533
(71) Applicant: ArvinMeritor Technology, LLC, Troy, MI 48084 (US)
(72) Inventor: Rumple, Stephen, Birmingham, 48009 (US); Pathak, Snehal, Rochester Hills, 48307 (US); Arevaldo Padilla, Francisco, Rochester Hills, 48309 (US); Svacha, Kevin, Lake Orion, 48362 (US)
(74) Representative: Whitfield, Jack Stephen

(57) **Abstract**

In the determination of location of tire-mounted sensors, for a tire position of a plurality of tire positions, a tested pressure reading of a tire at the tire position is determined via a pressure sensor, other than the tire-mounted sensor of the tire, operatively connected to the tire. The tested pressure reading is then compared with an associated past pressure reading provided by a tire-mounted sensor most recently associated with the tire position. When the tested pressure reading does not compare favorably with the associated past pressure reading, the tested pressure reading is compared with non-associated past pressure readings provided by tire-mounted sensors that were not most recently associated with the tire position. When the tested pressure reading compares favorably with a particular non-associated past pressure reading corresponding to a particular tire-mounted sensor, the sensor identification of the particular tire-mounted sensor is associated with the tire position.

## Description

### FIELD

This application claims benefit of priority under 35 U.S.C. § 119(e) to U.S. Provisional Application No. 18/907533 filed on October 6, 2024, and titled "Determination of location of tire-mounted sensors among a plurality of vehicle tire positions", the entire disclosure of which is hereby incorporated by reference in its entirety. The present disclosure relates generally to tire pressure monitoring systems (TPMS) and, in particular, to the determination of locations of TPMS sensors on a vehicle.

### BACKGROUND

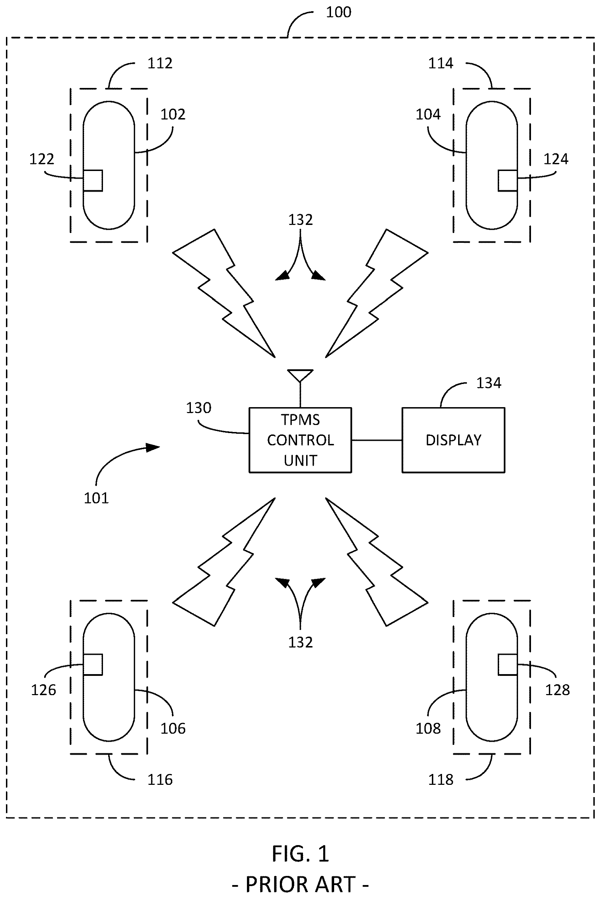

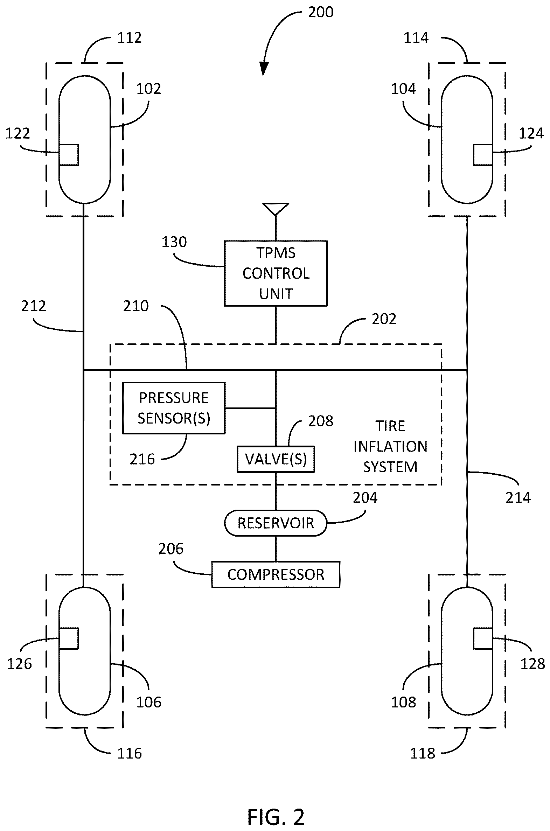

Tire pressure monitoring systems (TPMS) are well-known in the art. In such systems, each tire of a vehicle may be equipped with a pressure sensor (sometimes deployed as part of the tire valve just within the rim of the tire) configured to detect fluid pressure within the tire. An example of such a system is schematically illustrated with reference to FIG. 1, which depicts a vehicle 100 comprising a TPMS 101. The vehicle comprises a plurality of tires 102-108 uniquely deployed at a plurality of tire positions or locations 112-118. For example, as shown, the vehicle comprises four tires 102-118 with one tire deployed at each of four tire positions 112-118, i.e., a left-front tire position 112, a right-front tire position 114, a left-rear tire position 116 and a right-rear tire position 118. It is appreciated that, in practice, a given vehicle may have more or less tire positions depending on the nature of the vehicle. Though not shown in FIG. 2, the tire positions may also include one or more spare tires stored within the vehicle. As further shown, each tire 102-108 has a uniquely corresponding (i.e., in a one-to-one relationship) tire-mounted sensor 122-128 such as known TPMS sensors.

As further known in the art, each tire-mounted sensor 122-128 is equipped with necessary hardware that permit the sensor to measure fluid pressure in the corresponding tire and transmit such data (typically in a digital format) to a centralized TPMS control unit 130 via one or more suitable wireless channels 132 such as short range radio frequency (RF) channels. Additionally, each tire-mounted sensor 122-128 has a unique sensor identification assigned thereto, and each transmission of tire pressure data by the tire-mounted sensor 122-128 is accompanied by the sensor identification of the transmitting tire-mounted sensor. In turn, the TPMS control unit 130, which may comprise a processing device such as a microcontroller or similar component, is configured to provide pressure sensor readings received from each tire-pressure sensor to a user of the vehicle via a suitable display 134.

Often, the pressure sensor readings thus obtained are depicted on the display 134 in spatial manner correlating with the tire positions of the vehicle. For example, in the case of the vehicle 100 shown in FIG. 1, the pressure reading for the left-front tire position 112 would be displayed in an upper left portion of the display, the pressure reading for the right-front tire position 114 would be displayed in an upper right portion of the display, the pressure reading for the left-rear tire position 112 would be displayed in an lower left portion of the display and the pressure reading for the right-rear tire position 112 would be displayed in a lower right portion of the display. In order to correctly display the tire pressure readings, it is necessary for the TPMS control unit 130 to have knowledge of each unique sensor identification within the system 101 and for the TPMS control unit 130 to store such sensor identifications in association with corresponding tire locations 112-118. Thus, for example, the system 101 depicted in FIG. 1 may have four tire-mounted sensors having sensor identifications (ID) 1-4, and have knowledge that sensor ID 1 was most recently deployed in the tire located at the left-front tire position 112, sensor ID 2 was most recently deployed in the tire located at the right-front tire position 114, sensor ID 3 was most recently deployed in the tire located at the left-rear tire position 116 and sensor ID 4 was most recently deployed in the tire located at the right-rear tire position 118.

However, if the position of the tires 112-118 is changed for any reason (for example, following tire rotation during normal vehicle maintenance procedures), it becomes necessary for the association of sensor identifications and tire locations to be updated to reflect the new tire configuration in order to correctly display subsequently-determined pressure readings. To this end, a variety of techniques have been proposed that frequently require the use of additional equipment. For example, some systems are capable of discerning between wireless signals received from the various tire-mounted sensors or are equipped with additional sensors (e.g., magnetic sensors) capable of discerning unique magnetic patterns to identify specific tire-mounted sensors. Still others rely on the use of external stimulation sources to cause pressure spikes in each tire in a spatially predicable way such that each tire's position may be uniquely identified.

Further still, Japanese Patent Number 3912119 B2 ("the '119 patent") teaches an embodiment of a system comprising a tire inflation system in addition to a TPMS, which tire inflation system is capable of individually inflating or deflating each tire. In the '119 patent, all tires have a nominal pressure and a controller of the system stores various pressures for each tire position to be used when identifying specific locations of each tire and its corresponding tire-mounted sensor. Thus, during a "registration mode" each tire is inflated to a uniquely identifying pressure, e.g., the tire at the left-front tire position is inflated to a pressure of 350 KPa, the tire at the right-front tire position is inflated to pressure of 300 KPa, the tire at the left-rear tire position is inflated to a pressure of 250 KPa, and the tire at the right-rear tire position is inflated to a pressure of 200 KPa. Thereafter, the pressure readings from each tire's TPMS sensor are collected (along with the corresponding sensor identifications) and compared to the known identification pressures. Based on the identification of each TPMS sensor, the location of each tire can be determined through matching of the measured and identification tire pressures. After the registration mode, each tire is then returned to its nominal pressure.

While the process taught by the '119 patent can work, it requires changing the tire pressure of each tire every time a location determination needs to be made. Depending on the nature of the tires involved, this could substantially increase the time required to set the identification tire pressure for each tire and, following identification of individual tire locations, further modification of each tire's pressure back to the nominal tire pressure.

Thus, techniques that improve upon existing capabilities for determining tire position identification would be a welcome addition to the art.

### SUMMARY

The above-described shortcomings are addressed through the provision of techniques for the determination of location of tire-mounted sensors among a plurality of vehicle tire positions in accordance with the instant disclosure. In particular, in one embodiment, for a tire position of the plurality of tire positions, a tested pressure reading of a tire of the plurality of tires at the tire position is determined via a pressure sensor, other than the tire-mounted sensor of the tire, that is operatively connected to the plurality of tires. The tested pressure reading is then compared with an associated past pressure reading provided by a tire-mounted sensor of the plurality of tire-mounted sensors most recently associated with the tire position. When the tested pressure reading does not compare favorably with the associated past pressure reading, the tested pressure reading is compared with non-associated past pressure readings provided by tire-mounted sensors of the plurality of tire-mounted sensors that were not most recently associated with the tire position. When the tested pressure reading compares favorably with a particular non-associated past pressure reading of the non-associated past pressure readings corresponding to a particular tire-mounted sensor of the plurality of tire-mounted sensors, the sensor identification of the particular tire-mounted sensor is associated with the tire position.

In an embodiment, the tested pressure reading is associated with the sensor identification of the particular tire-mounted sensor to provide an updated associated past pressure reading.

In an embodiment, the same process is repeated for at least one remaining tire position of the plurality of tire positions.

In an embodiment, the pressure sensor is a component of a tire inflation system.

In an embodiment, the tested pressure reading does not compare favorably with the associated past pressure reading when the tested pressure reading is less than a lower threshold or greater than an upper threshold , wherein the lower threshold and upper threshold define a range that includes the associated past pressure reading. Additionally, in an embodiment, the tested pressure reading compares favorably with the particular non-associated past pressure reading when the tested pressure reading is not less than a lower threshold and not greater than an upper threshold, wherein the lower threshold and upper threshold define a range that includes the particular non-associated past pressure reading.

In an embodiment, the location determination process is performed in response to a location determination request, which location determination request can be provided via a user interface or via an indication of completion of a vehicle-related event.

Embodiments of a corresponding apparatus are also disclosed.

### BRIEF DESCRIPTION OF THE DRAWINGS

The foregoing and other features and advantages will be discussed in detail in the following non-limiting description of specific embodiments in connection with the accompanying drawings, in which:
FIG. 1 is a schematic illustration of a vehicle comprising a TPMS in accordance with prior art techniques;
FIG. 2 is a schematic illustration of a vehicle comprising a TPMS and tire inflation system in accordance with the instant disclosure;
FIG. 3 is a schematic illustration of an implementation of a processing device that may be used to implement various techniques in accordance with the instant disclosure; and
FIG. 4 is a flowchart illustrating processing in accordance with the instant disclosure.

### DETAILED DESCRIPTION OF THE PRESENT EMBODIMENTS

As used herein, phrases substantially similar to "at least one of A, B or C" are intended to be interpreted in the disjunctive, i.e., to require A or B or C or any combination thereof unless stated or implied by context otherwise. Further, phrases substantially similar to "at least one of A, B and C" are intended to be interpreted in the conjunctive, i.e., to require at least one of A, at least one of B and at least one of C unless stated or implied by context otherwise. Further still, the term "substantially" or similar words requiring subjective comparison are intended to mean "within manufacturing tolerances" unless stated or implied by context otherwise.

As used herein, the phrase "operatively connected" refers to at least a functional relationship between two elements and may encompass configurations in which the two elements are directed connected to each other, i.e., without any intervening elements, or indirectly connected to each other, i.e., with intervening elements.

Referring now to FIG. 2, a vehicle 200 comprising both a TPMS system (as described above relative to FIG. 1) and a tire inflation system 202 is schematically illustrated. As with the vehicle 100 of FIG. 1, the example vehicle 200 comprises a plurality of tires 102-108 deployed at a uniquely corresponding plurality of tire positions 112-118. Likewise, as in FIG. 1, each of the tires 102-108 comprises a tire-mounted sensor 122-128 uniquely deployed within each tire 102-108, where each tire-mounted sensor 122-128 includes a unique sensor identification.

The vehicle 200 in FIG. 2 also includes a tire inflation system 202 in fluid communication with a fluid reservoir 204 that, in turn, is maintained in a pressurized state (the range of which will typically vary in dependence upon the particular application) by a compressor 206 as known in the art. Fluid from the reservoir 204 may be routed, as needed, to one or more of the tires 102-108 by one or more valves 208 (e.g., solenoid valves) operating under the control of a processing device (not shown in FIG. 2). Suitable fluid conduits 210-214, schematically illustrated in FIG. 2, are in fluid communication with the valve(s) 204 as well as each tire 102-108 such that pressurized fluid from the reservoir 204 may be provided to each tire thereby effectuating tire inflation desired. Additionally, as known in the art, the valve(s) 208 may also be operated such that fluid is evacuated from any of the tires 102-108, through the fluid conduits 210-214 and valve(s) 208 to ambient, thereby effectuating tire deflation when desired.

As further shown in FIG. 2, one or more pressure sensors 210 are provided as part of the tire inflation system 202 and are configured to measure pressure in individual ones of the tires 102-108 as represented, for example, by the pressure sensed in one or more of the fluid conduits 210-214. In an embodiment, the tire inflation system 202 comprises at least one valve 208 and pressure sensor 216 pairing for each tire 102-108 on the vehicle, though this is not a requirement as, for example, only a single pressure sensor 216 could be employed for all of the tires 102-108. When measuring pressure in a given tire, and using techniques known in the art, the valves 208 can be controlled so as to provide gradually increasing fluid pressure pulses to each tire 102-108, with pressure measurements made via the corresponding pressure sensors 216 after such pulses. When successive post-pressure pulse pressure measurements are the same, the pressure measured by the pressure sensor 216 is indicative of the pressure in the tire under test.

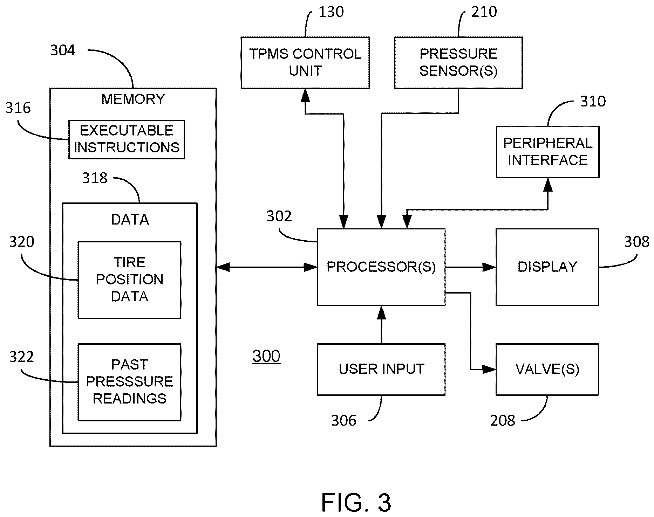

FIG. 2 also illustrates the TPMS control unit 130 operatively connected to the tire inflation system 202. In practice, this may be achieved by a processing device in the TPMS control unit 130 being in communication with another processing device used to implement the tire inflation system 202, an example of which is illustrated in FIG. 3 and described in further detail below. Alternatively, a single processing device may be used to implement the control functions provided by both the TPMS control unit 130 and tire inflation system 202 such that intra-processing device communications between the TPMS and tire inflation system control functions is possible.

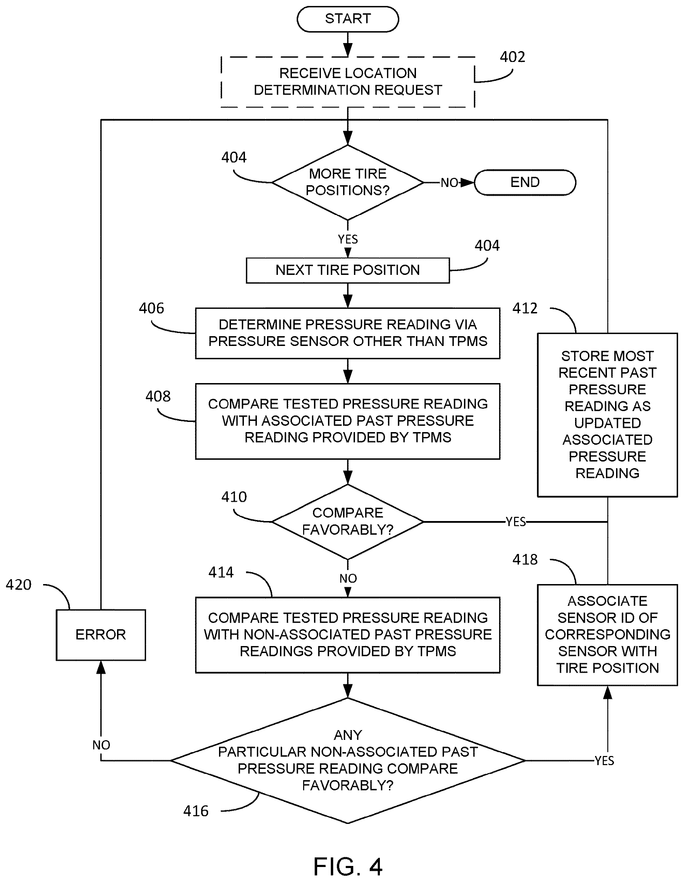

Regardless of the implementation, data may be communicated from the TPMS control unit 130 to the tire inflation system 202. More specifically tire pressure readings and sensor identifications from each tire-mounted sensor 122-128 may be provided by the TPMS control unit 130 to the tire inflation system 202. As described in further detail below, particularly with regard to FIG. 4, the techniques described herein are premised on the assumption that tire pressures in individual tires are relatively invariant, or only slowly varying, as a function of time (absent the occurrence of a catastrophic pressure loss as in the case of a large tire puncture or blow out, or catastrophic pressure increase as in the case of excessive tire heating) during the time frame in which processing according to the instant disclosure is performed. This in turn gives rise to the assumption that successive pressure readings of a given tire at a given tire location should be reasonably well correlated over time. As a result, the techniques described herein do not require pressure modification for tire-mounted sensor location purposes, as in the case of the '119 patent, but instead rely on comparisons of currently measured tire pressures, as determined by pressure sensors other than the tire-mounted sensors, with past pressure readings provided by the tire-mounted sensors.

Referring now to FIG. 3, a representative processing device 300 that may be used to implement the teachings of the instant disclosure. The device 300 may be used to implement, for example, the control function of the tire inflation system 202 described above. Regardless, the device 300 comprises a processor 302 coupled to a machine-readable storage component or memory 304. The memory 304, in turn, comprises stored executable instructions 316 and data 318, including tire position data 320 and past pressure readings 322. In an embodiment, the tire position data includes but is not limited to identification of each tire position on the vehicle (e.g., left-front, right-front, left-rear, etc.) and, for each tire position, a corresponding sensor identification most recently associated therewith, whereas the past sensor readings include the sensor identifications for each tire-mounted sensor on the vehicle and, for each sensor identification, a corresponding most recent pressure reading (though older past pressure readings may also be stored for other purposes).

In an embodiment, the processor 302 may comprise one or more of a microprocessor, microcontroller, digital signal processor, co-processor or the like or combinations thereof capable of executing the stored instructions 316 and operating upon the stored data 318. Likewise, the memory 304 may comprise one or more devices such as volatile or nonvolatile memory including but not limited to random access memory (RAM) or read only memory (ROM). Furthermore, the memory 304 may be embodied in a variety of forms, such as a hard drive, optical disc drive, floppy disc drive, etc. Processor and storage arrangements of the types illustrated in FIG. 3 are well known to those having ordinary skill in the art. In one embodiment, the processing techniques described herein are implemented as a combination of executable instructions and data within the storage component 304.

As shown, the device 300 may comprise one or more user input devices 306, a display 308, a peripheral interface 310, the TPMS control unit 130, valve(s) 208 and pressure sensor(s) 210 in communication with the processor 302. Though the one or more user input devices 306, display 308, peripheral interface 310, the TPMS control unit 130, valve(s) 208 and pressure sensor(s) 210 are illustrated as being separately connected to or in communication with the processor 302, those having skill in the art will appreciate that the illustrated connections can be implemented by one or more communication busses and, further, that such busses may permit communication between the various components connected thereto. The user input device 306 may comprise any mechanism for providing user input (such as a location determination request as described below) to the processor 302. For example, the user input device 306 may comprise a keyboard, a mouse, a touch screen (as part of the display 308), microphone and suitable voice recognition application or any other means whereby a user of the device 300 may provide input data to the processor 302. The display 308, may comprise any conventional display mechanism such as a cathode ray tube (CRT), flat panel display, or any other display mechanism known to those having ordinary skill in the art. In an embodiment, the display 308, in conjunction with suitable stored instructions 316, may be used to implement a graphical user interface. Generally, implementation of a graphical user interface in this manner is well known to those having ordinary skill in the art. The peripheral interface 310 may include the hardware, firmware and/or software necessary for communication with various peripheral devices, such as media drives (e.g., magnetic disk or optical disk drives), other processing devices or any other input source (including other, similar processing devices) used in connection with the instant techniques. Although not shown in FIG. 3, a network interface may also be provided that comprise hardware, firmware and/or software that allows the processor 302 to communicate with other devices via wired or wireless networks, whether local or wide area, private or public, as known in the art. For example, such networks may include the World Wide Web or Internet, or private enterprise networks, as known in the art.

Through the operative connection with the TPMS control unit 130, the processor 302 is able to receive tire-mounted sensor pressure readings and corresponding sensor identifications. In a similar vein, the operative connection with the pressure sensor(s) 210 permits the processor(s) to receive pressure readings in support of the techniques described herein. On the other hand, the operative connection between the processor(s) 302 and the valve(s) 208 permits the processor(s) 302 to control operation of the valve(s) 208, potentially through the use of intervening components to convert control signals provided by the processor(s) 302 into actuations needed to control the operating state of the respective valve(s) 208.

While the device 300 has been described as one form for implementing the techniques described herein, those having ordinary skill in the art will appreciate that other, functionally equivalent techniques may be employed. For example, as known in the art, some or all of the functionality implemented via executable instructions may also be implemented using firmware and/or hardware devices such as application specific integrated circuits (ASICs), programmable logic arrays, state machines, etc. Furthermore, other implementations of the device 300 may include a greater or lesser number of components than those illustrated. Once again, those of ordinary skill in the art will appreciate the wide number of variations that may be used is this manner. Further still, although a single processing device 300 is illustrated in FIG. 3, it is understood that a combination of such processing devices may be configured to operate in conjunction (for example, using known networking techniques) to implement the teachings of the instant disclosure. Further still, as noted above, the processing device 300 may be configured to not only implement functions related to controlling the tire inflation system 202, but may also be used to implement functionality of the TPMS control unit 130.

Referring now to FIG. 4, processing in accordance with one or more embodiments of the instant disclosure is illustrated. As noted above, the illustrated processing may be carried out by the processing device 300 illustrated in FIG. 3. Thus, beginning at optional block 402 (as indicated by the dashed border), a location determination request may be received and that serves as an indication that processing to determine location of tire-mounted sensors should be initiated. In an embodiment, the location determination request may be received through a user interface such as a touch screen display or similar mechanism. In this manner, a user of the vehicle can request location determination processing at essentially any time the vehicle is capable of performing such processing. It is nevertheless understood that other events could alternatively or additionally give rise to a location determination request, i.e., the occurrence of a vehicle-related event could serve as such a request. In this context, a vehicle-related event could be any event, following which, it may be desirable to perform location determination processing. For example, after completion of a maintenance event on the vehicle, such as the rotation of the vehicle's tires. As another example, a suitable event may result when the vehicle reaches a specific milestone such as a specific number of miles traveled or completion of a specific number of hours of vehicle operation.

Regardless of how or why such processing is initiated, processing continues at block 404 where it is determined whether there are any as-yet untested tire positions. If not, meaning that all tire positions have been tested as described below, then the location determination processing is complete. If untested tire positions remain, then processing continues at block 404 where a next tire position is identified. For example, and with reference to FIG. 2, if no tires have yet been tested, the left-front tire position may be deemed the default or initial tire position to be tested. On the other hand, if some, but not all, tire positions have been tested, the next tire position may be identified based on a predetermined testing order.

Once a tire position has been identified for testing, processing continues at block 406 where a pressure reading of the tire at the identified tire position is determined by a sensor other than any of the tire-mounted sensors associated with the vehicle. For example, with reference to FIG. 2, this may be done by obtaining a pressure reading from the one or more pressure sensors 216 provided as part of the tire inflation system 202. In an embodiment, such a pressure reading is automatically determined by the processing device 300 through control of the appropriate valve(s) 208 followed by receipt of a pressure reading from the pressure sensor(s) 216.

Thereafter, at block 408, the resulting tested pressure reading is compared with an associated past pressure reading (for example, stored as part of the past pressure readings data 322) provided by the tire-mounted sensor most recently associated with the tire position under consideration. Thereafter, at block 410, a determination is made whether tested pressure reading compares favorably with the associated past pressure reading. A favorable comparison in this context is found if the tested pressure reading is sufficiently close, if not identical, to the associated past pressure reading, where "sufficiently close" is defined according to a range of values encompassing the associated past pressure reading. Such a range may be defined by a certain percentage of the associated past pressure reading both above and below the associated past pressure reading. For example, assume the noted percentage is 5% and the associated past pressure reading is 60 PSI/413 Kpa. In this case, the upper limit of the "compares favorably" range would be 63 PSI/434 Kpa, whereas the lower limit would be 57 PSI/393 Kpa such that any value of the tested pressure reading falling within that range (inclusive of the endpoints) would be deemed as sufficiently matching, i.e., compare favorably. Conversely, if the tested pressure reading is outside of this range (greater than the upper limit or less than the lower limit), it would not be sufficiently matching, i.e., would compare unfavorably. While a specific example has been discussed, it is appreciated that such "favorable" and "unfavorable" conditions may be defined as a matter of design choice depending on the needs of a specific vehicle. For example, rather than having the range endpoints defined as included within the range, they could instead be defined as outside of the range. Furthermore, in the illustrated example, the range is centered on the associated past pressure reading; this is not a requirement as the range could be asymmetrically defined about the associated past pressure reading.

If the comparison at block 410 results in a favorable comparison, processing continues at block 412 where it is assumed that the sensor identification currently associated with the tire location under consideration has not changed, and the most recent associated past pressure reading (being more trusted as a direct pressure reading as opposed to the more remote pressure sensor 216) is therefore stored in association with the sensor identification as an updated associated past pressure reading. Thereafter, processing continues at block 404 for a determination whether additional tire positions need to be tested.

If the comparison at block 410 does not result in a favorable comparison, it may be the case that the vehicle's tires may have been rotated and processing continues at block 414 where the tested pressure reading is compared with one or more non-associated past pressure readings. In this context, "non-associated" refers to those tire-mounted sensors other than the tire-mounted sensor most recently associated with the tire position under consideration. That is, the tested tire pressure is compared to the most recent pressure readings associated with the other tire-mounted sensors based on the intuition that the tire now located at the tire position under consideration may have been previously associated with a different tire position.

Thus, following the comparison(s) at block 414, processing continues at block 416 where it is determined whether the tested pressure reading compared favorably (as described above) with any particular non-associated past pressure reading. If so, processing then continues at block 418 where the sensor identification of a particular tire-mounted sensor corresponding to the particular non-associated past pressure reading is associated with the tire position under consideration. In other words, the sensor identification associated with the matching non-associated past pressure reading is now deemed to be tire-mounted sensor deployed at the tire position under consideration. Following block 418, the most recent past pressure reading (in this case, a non-associated past pressure reading) is again stored as an updated associated pressure reading for the particular tire-mounted sensor at block 412, with further processing continuing at block 404.

If the comparison did not result in any non-associated past pressure reading at block 416, processing continues at block 420 where an error indication is provided. In this situation, the error indication may be indicative, for example, that a new tire (with an uncalibrated sensor) has been added to the vehicle.

While the various embodiments in accordance with the instant disclosure have been described in conjunction with specific implementations thereof, it is evident that many alternatives, modifications and variations will be apparent to those skilled in the art. Accordingly, the preferred embodiments of the invention as set forth herein are intended to be illustrative only and not limiting so long as the variations thereof come within the scope of the appended claims and their equivalents.

### Clauses:

1. A method for determining location of at least one of a plurality of tire-mounted sensors among a plurality of tire positions on a vehicle having a plurality of tires, each of the plurality of tires uniquely having one of the plurality of tire-mounted sensors deployed thereon, and each of the plurality of tire-mounted sensors having a unique sensor identification associate therewith, the method comprising:
   for a tire position of the plurality of tire positions, determining a tested pressure reading of a tire of the plurality of tires at the tire position via a pressure sensor, other than the tire-mounted sensor of the tire , operatively connected to the plurality of tires;
   comparing the tested pressure reading with an associated past pressure reading provided by a tire-mounted sensor of the plurality of tire-mounted sensors most recently associated with the tire position;
   when the tested pressure reading does not compare favorably with the associated past pressure reading, comparing the tested pressure reading with non-associated past pressure readings provided by tire-mounted sensors of the plurality of tire-mounted sensors that were not most recently associated with the tire position; and
   when the tested pressure reading compares favorably with a particular non-associated past pressure reading of the non-associated past pressure readings corresponding to a particular tire-mounted sensor of the plurality of tire-mounted sensors, associating the sensor identification of the particular tire-mounted sensor with the tire position.
2. The method of clause 1, further comprising:
   associating the tested pressure reading with the sensor identification of the particular tire-mounted sensor to provide an updated associated past pressure reading.
3. The method for determining location of at least one of the plurality of tire-mounted sensors further comprising repeating the steps of clause 1 for at least one remaining tire position of the plurality of tire positions.
4. The method of clause 1, wherein the pressure sensor is a component of a tire inflation system.
5. The method of clause 1, wherein the tested pressure reading does not compare favorably with the associated past pressure reading when the tested pressure reading is less than a lower threshold or greater than an upper threshold , wherein the lower threshold and upper threshold define a range that includes the associated past pressure reading.
6. The method of clause 1, wherein the tested pressure reading compares favorably with the particular non-associated past pressure reading when the tested pressure reading is not less than a lower threshold and not greater than an upper threshold, wherein the lower threshold and upper threshold define a range that includes the particular non-associated past pressure reading.
7. The method for determining location of at least one of the plurality of tire-mounted sensors further comprising a step of receiving a location determination request and performing the steps of clause 1 responsive to the request.
8 The method of clause 1, wherein the location determination request is provided via a user interface.
9. The method of clause 7, wherein the location determination request is an indication of completion of a vehicle-related event.
10. An apparatus for determining location of at least one of a plurality of tire-mounted sensors among a plurality of tire positions on a vehicle having a plurality of tires, each of the plurality of tires uniquely having one of the plurality of tire-mounted sensors deployed thereon, and each of the plurality of tire-mounted sensors having a unique sensor identification associate therewith, the apparatus comprising:
   a pressure sensor, other than the plurality of tire-mounted sensors, operatively connected to the plurality of tires;
   a processing device, operatively connected to the pressure sensor and to the plurality of tire-mounted sensors; and
   memory, operatively connected to the processing device and having stored thereon machine-readable instructions defining a process and that, when executed by the processing device, cause the processing device to:
   for a tire position of the plurality of tire positions, determine a tested pressure reading of a tire of the plurality of tires at the tire position via the pressure sensor;
   compare the tested pressure reading with an associated past pressure reading provided by a tire-mounted sensor of the plurality of tire-mounted sensors most recently associated with the tire position;
   when the tested pressure reading does not compare favorably with the associated past pressure reading, compare the tested pressure reading with non-associated past pressure readings provided by tire-mounted sensors of the plurality of tire-mounted sensors that were not most recently associated with the tire position; and
   when the tested pressure reading compares favorably with a particular non-associated past pressure reading of the non-associated past pressure readings corresponding to a particular tire-mounted sensor of the plurality of tire-mounted sensors, associate the sensor identification of the particular tire-mounted sensor with the tire position.
11. The apparatus of clause 10, the memory further comprising executable instructions defining the process and that, when executed by the processing device, cause the processing device to:
   associate the tested pressure reading with the sensor identification of the particular tire-mounted sensor to provide an updated associated past pressure reading.
12. The apparatus for determining location of at least one of the plurality of tire-mounted sensors, wherein the memory further comprises executable instructions defining the process and that, when executed by the processing device, cause the processing device to repeat the process according to clause 10 for at least one remaining tire position of the plurality of tire positions.
13. The apparatus of clause 10, wherein the tested pressure reading does not compare favorably with the associated past pressure reading when the tested pressure reading is less than a lower threshold or greater than an upper threshold, wherein the lower threshold and upper threshold define a range that includes the associated past pressure reading.
14. The apparatus of clause 10, wherein the tested pressure reading compares favorably with the particular non-associated past pressure reading when the tested pressure reading is not less than a lower threshold and not greater than an upper threshold, wherein the lower threshold and upper threshold define a range that includes the particular non-associated past pressure reading.
15. The apparatus for determining location of at least one of the plurality of tire-mounted sensors, wherein the memory further comprises executable instructions defining the process and that, when executed by the processing device, cause the processing device to receive a location determination request and perform the process according to clause 10 responsive to the request.
16. The apparatus of clause 15, wherein the location determination request is provided via a user interface operatively connected to the processing device.
17. The apparatus of clause 15, wherein the location determination request is an indication of completion of a vehicle-related event.
18. The apparatus of clause 10, wherein the pressure sensor is a component of a tire inflation system.

## Claims

1. A method for determining location of at least one of a plurality of tire-mounted sensors among a plurality of tire positions on a vehicle having a plurality of tires, each of the plurality of tires uniquely having one of the plurality of tire-mounted sensors deployed thereon, and each of the plurality of tire-mounted sensors having a unique sensor identification associate therewith, the method comprising:
for a tire position of the plurality of tire positions, determining a tested pressure reading of a tire of the plurality of tires at the tire position via a pressure sensor, other than the tire-mounted sensor of the tire , operatively connected to the plurality of tires;
comparing the tested pressure reading with an associated past pressure reading provided by a tire-mounted sensor of the plurality of tire-mounted sensors most recently associated with the tire position;
when the tested pressure reading does not compare favorably with the associated past pressure reading, comparing the tested pressure reading with non-associated past pressure readings provided by tire-mounted sensors of the plurality of tire-mounted sensors that were not most recently associated with the tire position; and
when the tested pressure reading compares favorably with a particular non-associated past pressure reading of the non-associated past pressure readings corresponding to a particular tire-mounted sensor of the plurality of tire-mounted sensors, associating the sensor identification of the particular tire-mounted sensor with the tire position.

2. The method of claim 1, further comprising:
associating the tested pressure reading with the sensor identification of the particular tire-mounted sensor to provide an updated associated past pressure reading.

3. The method for determining location of at least one of the plurality of tire-mounted sensors further comprising repeating the steps of claim 1 for at least one remaining tire position of the plurality of tire positions.

4. The method of any previous claim, wherein the pressure sensor is a component of a tire inflation system.

5. The method of any previous claim, wherein the tested pressure reading does not compare favorably with the associated past pressure reading when the tested pressure reading is less than a lower threshold or greater than an upper threshold, wherein the lower threshold and upper threshold define a range that includes the associated past pressure reading.

6. The method of any of claims 1 to 4, wherein the tested pressure reading compares favorably with the particular non-associated past pressure reading when the tested pressure reading is not less than a lower threshold and not greater than an upper threshold, wherein the lower threshold and upper threshold define a range that includes the particular non-associated past pressure reading.

7. The method for determining location of at least one of the plurality of tire-mounted sensors further comprising a step of receiving a location determination request and performing the steps of any previous claim responsive to the request, optionally wherein the location determination request is provided via a user interface, and/or wherein the location determination request is an indication of completion of a vehicle-related event.

8. An apparatus for determining location of at least one of a plurality of tire-mounted sensors among a plurality of tire positions on a vehicle having a plurality of tires, each of the plurality of tires uniquely having one of the plurality of tire-mounted sensors deployed thereon, and each of the plurality of tire-mounted sensors having a unique sensor identification associate therewith, the apparatus comprising:
a pressure sensor, other than the plurality of tire-mounted sensors, operatively connected to the plurality of tires;
a processing device, operatively connected to the pressure sensor and to the plurality of tire-mounted sensors; and
memory, operatively connected to the processing device and having stored thereon machine-readable instructions defining a process and that, when executed by the processing device, cause the processing device to:
for a tire position of the plurality of tire positions, determine a tested pressure reading of a tire of the plurality of tires at the tire position via the pressure sensor;
compare the tested pressure reading with an associated past pressure reading provided by a tire-mounted sensor of the plurality of tire-mounted sensors most recently associated with the tire position;
when the tested pressure reading does not compare favorably with the associated past pressure reading, compare the tested pressure reading with non-associated past pressure readings provided by tire-mounted sensors of the plurality of tire-mounted sensors that were not most recently associated with the tire position; and
when the tested pressure reading compares favorably with a particular non-associated past pressure reading of the non-associated past pressure readings corresponding to a particular tire-mounted sensor of the plurality of tire-mounted sensors, associate the sensor identification of the particular tire-mounted sensor with the tire position.

9. The apparatus of claim 8, the memory further comprising executable instructions defining the process and that, when executed by the processing device, cause the processing device to:
associate the tested pressure reading with the sensor identification of the particular tire-mounted sensor to provide an updated associated past pressure reading.

10. The apparatus for determining location of at least one of the plurality of tire-mounted sensors, wherein the memory further comprises executable instructions defining the process and that, when executed by the processing device, cause the processing device to repeat the process according to claim 8 for at least one remaining tire position of the plurality of tire positions.

11. The apparatus of any of claims 8 to 10, wherein the tested pressure reading does not compare favorably with the associated past pressure reading when the tested pressure reading is less than a lower threshold or greater than an upper threshold, wherein the lower threshold and upper threshold define a range that includes the associated past pressure reading.

12. The apparatus of any of claims 8 to 10, wherein the tested pressure reading compares favorably with the particular non-associated past pressure reading when the tested pressure reading is not less than a lower threshold and not greater than an upper threshold, wherein the lower threshold and upper threshold define a range that includes the particular non-associated past pressure reading.

13. The apparatus for determining location of at least one of the plurality of tire-mounted sensors, wherein the memory further comprises executable instructions defining the process and that, when executed by the processing device, cause the processing device to receive a location determination request and perform the process according to claim 8 responsive to the request, optionally wherein the location determination request is provided via a user interface operatively connected to the processing device.

14. The apparatus of claim 13, wherein the location determination request is an indication of completion of a vehicle-related event.

15. The apparatus of any of claims 8 to 14, wherein the pressure sensor is a component of a tire inflation system.
